## Europäisches Patentamt
## European Patent Office
## Office européen des brevets

(19)

(11) Numéro de publication: **0 189 029**
**B1**

(12) # FASCICULE DE BREVET EUROPÉEN

(45) Date de publication du fascicule du brevet:
**31.08.88**

(51) Int. Cl.⁴: **F 28 B 3/00,** B 01 D 3/22

(21) Numéro de dépôt: **86100024.8**

(22) Date de dépôt: **02.01.86**

(54) Condenseur à mélange, notamment pour l'exploitation de l'énergie thermique des mers.

(30) Priorité: **04.01.85 FR 8500095**

(43) Date de publication de la demande:
**30.07.86 Bulletin 86/31**

(45) Mention de la délivrance du brevet:
**31.08.88 Bulletin 88/35**

(84) Etats contractants désignés:
**DE FR GB IT SE**

(56) Documents cité:
**DE-C-119 658**
**DE-C-147 655**
**DE-C-148 049**
**DE-C-214 262**
**DE-C-329 669**
**FR-A-600 038**
**FR-A-1 581 820**
**FR-A-2 190 510**
**US-A-1 776 020**
**US-A-1 981 989**
**US-A-2 558 222**
**US-A-2 934 326**
**US-A-3 911 067**
**US-A-4 394 139**

(73) Titulaire: **INSTITUT FRANCAIS DE RECHERCHE POUR L'EXPLOITATION DE LA MER (IFREMER),**
**66 avenue d'Iéna, F-75116 Paris (FR)**

(72) Inventeur: **Minart, Paul, 24, rue du Commandant Bulle, F-38100 Grenoble (FR)**

(74) Mandataire: **Weinmiller, Jürgen, Lennéstrasse 9**
**Postfach 24, D-8133 Feldafing (DE)**

LIBER, STOCKHOLM 1988

EP 0 189 029 B1

## Description

La présente invention concerne un condenseur par mélange destiné notamment à une installation de récupération d'énergie thermique des mers.

Ce type d'installation comprend essentiellement un évaporateur alimenté en eau chaude de surface, une turbine à vapeur, et un condenseur alimenté en eau froide des profondeurs avec évacuation des gaz incondensables par une pompe à vide. Pour utiliser au mieux la différence de température entre l'eau chaude et l'eau froide, le condenseur doit permettre de minimiser les paramètres suivants:

1) L'écart de température entre la vapeur à son entrée et l'eau réchauffée à sa sortie, cet écart étant appelé pincement,
2) L'écart de température entre le gaz extrait par la pompe à vide (vapeur résiduelle et gaz incondensables) et l'eau à l'entrée, cet écart étant appelé approche,
3) La perte de pression côté gaz à la traversée de l'appareil,
4) La perte de charge côté eau à la traversée de l'appareil.

La nécessité d'effectuer un mélange intime de l'eau et de la vapeur, sans créer de pertes de charge importantes ni de phénomène de flooding (entraînement de l'eau par la vapeur dont le débit volumique est en général beaucoup plus élevé) conduit à s'intéresser aux appareils où l'eau s'écoule sous forme de cascades traversées horizontalement par la vapeur.

Un premier condenseur connu est décrit dans le document de brevet DE-C-214 262 (Worthington). L'appareil présente des formes cylindriques, et comporte:
- une série de plateaux perforés de formes annulaires, présentant un axe vertical commun, et dont l'espacement entre deux plateaux consécutifs augmente du haut au bas de l'appareil,
- à la partie supérieure, un refroidisseur d'air constitué par un espace annulaire alimenté en eau par un autre plateau annulaire perforé.

Dans cette appareil, l'eau froide alimente en parallèle, d'une part le refroidisseur d'air, d'autre part la série de plateaux qui établit un écoulement d'eau sous forme d'une série de cascades. L'alimentation en vapeur s'effectue à la base de l'appareil. Le mélange gazeux traverse en série et à courants croisés chacune des cascades, la diminution progressive de l'espace entre deux plateaux assurant une variation progressive de la section de passage. Le mélange gazeux travers enfin le refroidisseur d'air avant de parvenir à une ouverture d'extraction.

Cette disposition permet d'obtenir une valeur faible dudit paramètre d'approche du fait de la circulation à contre-courant d'eau et de vapeur et de la présence d'un refroidisseur d'air. Cependant, elle présente trois inconvénients majeurs:
1) La géométrie cylindrique se prête mal à de fortes puissances thermiques, car dans ce cas le diamètre de l'enceinte est important, les trajets radiaux parcourus par la vapeur sont donc longs, et les pertes de pression correspondantes élevées. En général, les débits de vapeur admis par ce type d'appareil ne dépassent pas 20 t/h.
2) L'alimentation en eau en parallèle de la série de plateaux et du refroidisseur d'air constitue un gaspillage d'eau froide, l'eau passant par le refroidisseur d'air étant très peu réchauffée.
3) L'analyse des mécanismes de transfert thermique eau/mélange gazeux montre qu'il existe une hauteur optimale de cascade au delà de laquelle ce transfert devient très faible. Le fait d'utiliser des hauteurs de cascade variable ne permet donc pas de faire fonctionner l'appareil dans les conditions optimales.

Du fait des deux derniers inconvénients, la valeur dudit paramètre de pincement de ce type d'appareil est relativement élevée, de l'ordre de 3°C.

Un deuxième condenseur connu est décrit dans le document de brevet US-A-3 911 067 (Chen et autres). Il comporte une série de plateaux perforés horizontaux présentant chacun une forme rectangulaire allongée, ces plateaux se succédant verticalement avec une hauteur d'intervalle entre plateaux consécutifs sensiblement constante sur toute la hauteur de la série. L'eau froide alimente le plateau supérieur de ladite série, qui établit ainsi un écoulement sous forme d'une série de cascades de goutelettes. L'alimentation en gaz (vapeur et indensables) s'effectue sur toutes les cascades en parallèle, les gaz traversent les cascades dans la direction transversale. Cette disposition est dite à courants croisés. Les gaz non condensés sont extrait à l'aval des cascades. Les plateaux de ce condenseur sont disposés en deux séries symétriques par rapport à un plan vertical longitudinal.

Ce type d'appareil a l'avantage de présenter une géométrie plus simple que le premier condenseur décrit, et autorise, grâce à son architecture parallèle parallélépipédique des puissances thermiques importantes. Cependant, du fait qu'il ne fonctionne pas à contre-courant d'eau et de vapeur, mais seulement à courants croisés, il ne permet pas d'obtenir des valeurs suffisamment faibles desdits paramètres de pincement et d'approche.

La présente invention a pour but d'obtenir de manière simple des valeurs diminuées desdits paramètres de pincement et d'approche, avec de faibles pertes de charge côté eau et côté gaz.

Et elle a pour objet un condenseur à mélange, notamment pour l'exploitation de l'énergie thermique des mers, ce condenseur étant destiné à recevoir un débit de vapeur d'eau et à condenser cette vapeur par contact avec un débit d'eau froide, ce condenseur comportant
- une enceinte (10),
- au moins une arrivée de vapeur (14) au bas de cette enceinte, pour recevoir un mélange gazeux contenant de la vapeur d'eau et un gaz incondensable,
- au moins une série de plateaux horizontaux (11) disposés dans cette enceinte et présentant chacun une forme allongée selon une direction horizontale avec une longueur longitudinale commune, et une largeur selon une direction horizontale transversale commune, chaque plateau comportant un fond perforé de nombreux trous (22), ces plateaux se succédant verticalement de haut en bas d'un premier plateau jusqu'à un dernier plateau avec une hauteur d'intervalle entre plateaux consécutifs sensiblement constante, sur toute la hauteur de la série,
- au moins une arrivée d'eau froide (15) alimentant ledit premier plateau pour que les trous du fond de ce plateau laissent couler autant de jets d'eau verticaux dont l'ensemble constitue une première cascade qui s'étend sur la longueur de ce plateau, qui est associée à celui-ci, et qui alimente le deuxième plateau, et pour que ce dernier forme de même une deuxième cascade qui lui est associée et alimente le troisième plateau, et ainsi de suite, jusqu'à une dernière cascade, chaque cascade (30) étant associée à un plateau de même rang, de manière à condenser de la vapeur par contact avec l'eau de ces cascades, cette eau étant réchauffée par ce contact et par son mélange à l'eau de condensation,
- au moins une évacuation d'eau réchauffée (32) au bas de ladite dernière cascade,
- et des moyens d'extraction de gaz incondensables (16, 28) au haut de cette enceinte, ces moyens étant placés de manière que le mélange gazeux (20) arrivant par ladite arrivée de vapeur ne puisse atteindre ces moyens d'extraction qu'en traversant lesdites cascades (30) selon ladite direction transversale,
- ce condenseur étant caractérisé par le fait qu'il comporte des parois de séparation (SA, SB) divisant ladite série de plateaux aves les cascades associées en plusieurs tronçons (12, 13) se succédant verticalement et tels que les diverses cascades (30) issues des divers plateaux (11) d'un même tronçon soient traversées en parallèle dans un même sens transversal par ledit mélange gazeux, et que les tronçons successifs soient parcourus en série de bas en haut par ce mélange, le nombre de plateaux des tronçons successifs croissant du premier au dernier tronçon de manière à diminuer la section de passage de ce mélange gazeux quand son débit décroît par condensation de vapeur, et à maintenir ainsi une vitesse de balayage sensiblement optimale propre à entraîner ledit gaz incondensable et à favoriser les échanges thermiques, tout en donnant aux diverse cascades sensiblement une même hauteur optimale qui optimise les échanges thermiques vis à vis de la perte de charge côté eau.

Les signes de référence entre parenthèses renvoient à titre d'exemple aux dessins annexés suivant:
- la figure 1 est une vue d'un condenseur selon l'invention en coupe par un plan vertical transversal,
- la figure 2 est une vue en coupe de ce condenseur dans un plan horizontal au niveau d'un plateau intermédiaire,
- la figure 3 est une vue en coupe de ce condenseur dans un plan horizontal au niveau du plateau supérieur,
- la figure 4 est une vue en coupe de la cascade supérieure de ce condenseur, dans un plan vertical transversal,
- la figure 5 est une vue de dessus très schématique d'une installation comportant un certain nombre de faisceaux analogues à celui de la figure 1.

Deux modes de réalisation préférentiels de ce condenseur non exclusifs l'un de l'autre sont représentés en association et vont être décrits:
Un premier mode est caractérisé par une utilisation de la symétrie. Ce mode permet de limiter le nombre des parois à l'intérieur de l'enceinte pour le guidage de la vapeur. Chaque série de plateaux rectangulaires constitue un demi-faisceau associé à un autre demi-faisceau. Plus précisément le condenseur comporte dans ladite enceinte (10), deux dites séries de plateaux et de cascades disposées avec lesdites parois de séparation (SA, SB) symétriquement l'une de l'autre par rapport à un plan de symétrie vertical longitudinal (18) en formant les mêmes dits tronçons successifs et en délimitant pour ledit mélange gazeux dans chacun de ces tronçons un passage interne entre ces séries, ladite enceinte laissant à ce mélange un passage externe de chaque côté de l'ensemble de deux séries,
- ladite arrivée de vapeur (14) amenant ce mélange gazeux dans les passages externes du tronçon le plus bas (12),
- une dite paroi de séparation (SA) obturant ces passages externes au haut de ce tronçon le plus bas pour forcer ce mélange à passer dans ledit passage interne à travers lesdites cascades de ce tronçon et à introduire ce mélange dans le passage interne du tronçon immédiatement supérieur (13),
- une dite paroi de séparation (SB) obturant le passage interne au haut de ce tronçon immédiatement supérieur pour forcer ce mélange à passer dans le passage externe de ce tronçon à travers lesdites cascades et pour l'introduire dans le passage externe du tronçon suivant vers le haut (9).

Plus généralement lesdites parois de séparation (SA, SB) obturent alternativement lesdits passages externes et interne au haut desdits tronçons successifs sur toute la hauteur desdites séries. De préférence le nombre de ces tronçons est impair de manière que lesdits moyens d'extraction (16, 28) aspirent le gaz incondensable dans ledit passage interne supérieur.

Le plateau supérieur est de préférence unitaire et recouvre les deux demi-faisceaux correspondants.

Le second mode de réalisation préférentiel est caractérisé par l'adjonction d'un tronçon supérieur différent:

Chaque dite série comporte, en plus des tronçons précédemment mentionnés, un tronçon supérieur (9) qui comporte des perforations (26, 27) au moins dans des zones (ZT) du plateau supérieur (17) situées au-dessus dudit premier plateau (11), et régulièrement réparties sur la longueur dudit plateau supérieur en laissant des intervalles entre elles, la hauteur des cascades générées étant sensiblement égale à la dite hauteur optimale,
- ladite arrivée d'eau froide (15) alimentant ces zones de plateau supérieur pour que chacune de ces zones forme une cascade supérieure locale (31), de même section que cette zone,
- ledit premier plateau étant alimenté par ces cascades supérieures locales,
- lesdites parois de séparation (SB) faisant circuler ledit mélange gazeux à travers ces cascades locales supérieures en série après ledit tronçon immédiatement inférieur (13) vers lesdits moyens d'extraction (16, 28),
- le condenseur comportant en outre des parois de limitation (PA, PB) s'étendant verticalement entre ledit premier plateau et lesdites zones de plateau supérieures et obligeant ledit mélange gazeux provenant de la première cascade à traverser ces cascades locales pour aller vers lesdits moyens d'extraction, tout ceci de manière à diminuer encore la section de passage du mélange gazeux pour conserver ladite vitesse de balayage optimale tout en évitant des déplacements longitudinaux importants du mélange gazeux.

De préférence chacune desdites cascades locales formées sous lesdites zones de plateau supérieures (ZT) et entre lesdites parois de limitation (PA) présente audit mélange gazeux une largeur de passage décroissante d'amont en aval pour conserver sensiblement à ce mélange ladite vitesse de balayage optimale sur tout son parcours à travers cette cascade locale vers lesdits moyens d'extraction (16, 28), malgré la condensation de vapeur durant ce parcours.

De préférence encore lesdites cascades locales formées sous lesdites zones de plateau perforées (ZT) présentent chacune en plan la forme d'un trapèze avec une grande base qui constitue une entrée pour ledit mélange gazeux et qui s'étend selon ladite direction longitudinale, une petite base qui constitue une sortie vers lesdits moyens d'extraction (16, 28) et deux côtés obliques bouchés par certaines desdites parois de limitation (PA), d'autres de ces parois de limitation (PB) obturant les intervalles longitudinaux entre cascades locales consécutives.

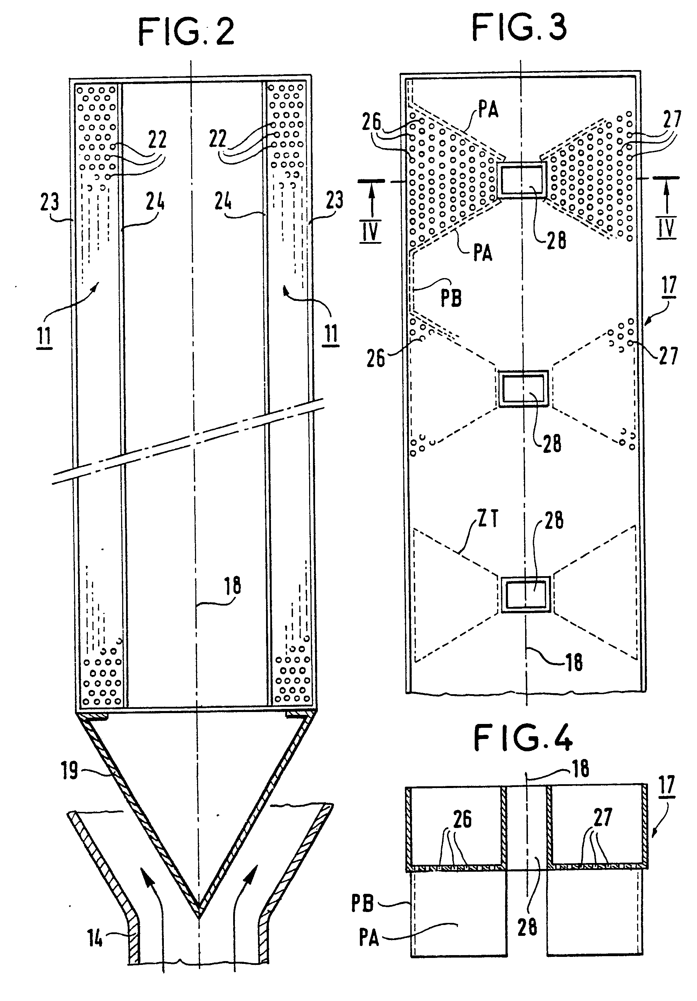

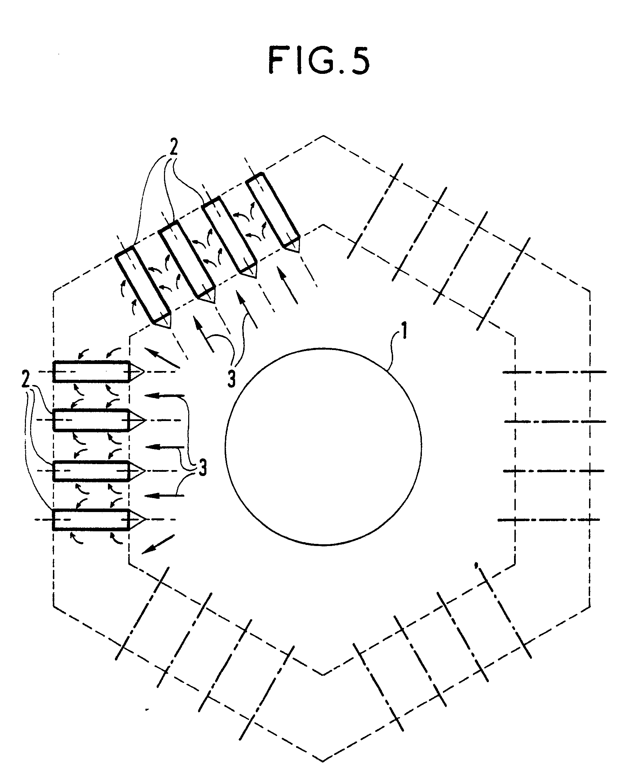

On va donner maintenant les principaux critères de choix des paramètres intervenant dans le dimensionnement du condenseur selon l'invention,
- hauteur optimale des cascades: l'analyse du transfert thermique entre un jet tombant verticalement et un gaz le croisant horizontalement montre que le coefficient de transfert diminue rapidement le long du jet, par suite de la réduction du gradient de température entre les couches externes de liquide et le gaz. Au delà de la hauteur dite optimale, une augmentation de la hauteur n'apporte pas un gain au transfert thermique suffisant compte-tenu du surcroît d'encombrement et de perte de charge côté eau qu'elle provoque. Par ailleurs, au-delà d'une certaine hauteur maximale, un jet d'eau se dissocie en gouttes qui sont susceptibles d'être entraînées facilement par la vapeur. La hauteur dite optimale sera donc toujours choisie inférieure ou égale à une hauteur dite maximale.
- vitesse de balayage optimale: au fur et à mesure de la progression du mélange vapeur-gaz incondensables dans le condenseur, la concentration en gaz incondensables augmente par suite de la condensation de la vapeur. Si une vitesse suffisante du mélange gazeux n'est pas maintenue, on court le risque d'une accumulation de gaz incondensables qui se traduit par une chute locale de la pression partielle de vapeur et du coefficient de transfert thermique, et donc par une altération du processus de condensation. Par ailleurs, ce coefficient de transfert augmentant avec la vitesse, on a intérêt à opter pour des vitesses fortes. Cependant, la vitesse du mélange gazeux est limitée à la valeur maximale qui provoque sur au moins un des jets d'une cascade un déflection telle que le jet ne retombe plus sur le plateau perforé immédiatement inférieur. D'autre part, les fortes vitesses du mélange gazeux provoquent également des pertes de charge côté gaz élevées. Un compromis entre ces différents critères doit donc être effectué pour déterminer la vitesse de balayage optimale.
- longueur des plateaux: un même condenseur pouvant être fractionné en plusieurs faisceaux du type de celui de la figure 2, comme par exemple l'illustre la figure 5, la longueur optimale des plateaux d'un faisceau est essentiellement choisie en fonction de critères d'encombrement.
- largeur des plateaux: les plateaux étant rectangulaires, le volume compris entre deux plateaux successifs est parallélépipédique; les perforations d'un plateau forment une cascade dont la largeur est fixée par le nombre de rangées de jets d'eau. Ce nombre de rangées est choisi de manière qu'il n'entraîne pas une trop grande perte de charge pour la vapeur, mais il doit être suffisant pour assurer une répartition homogène du débit à travers toute la longueur de chaque cascade et le balayage des gaz incondensables, compte-tenu de la vitesse d'entrée de la vapeur.
- perforations: les perforations de deux rangées voisines sur un même plateau sont de préférence disposées en quinconce. Cette disposition est la plus appropriée pour éviter les chemins préférentiels de vapeur entre les jets, elle permet également une diffusion turbulente de la vapeur et un balayage des gaz incondensables.
- hauteur des bords 23, 24 des plateaux: ces hauteurs sont calculées de façon à garder un niveau d'eau compatible avec la perte de charge des perforations au débit d'eau choisi.

Un condenseur selon l'invention peut comporter un certain nombre de faisceaux tels que définis ci-dessus, ces faisceaux étant régulièrement répartis autour d'une arrivée centrale de vapeur, leurs plans de symétrie étant sensiblement parallèle à la direction de la vitesse d'entrée de la vapeur entre deux faisceaux.

Dans un tel cas, la vapeur arrive longitudinalement par une entrée de vapeur 14 à un extrémité du faisceau (ou par deux entrées aux deux extrémités). Un écran séparateur 19 l'empêche de pénétrer longitudinalement entre les plateaux et la dirige sur les côtés du faisceau.

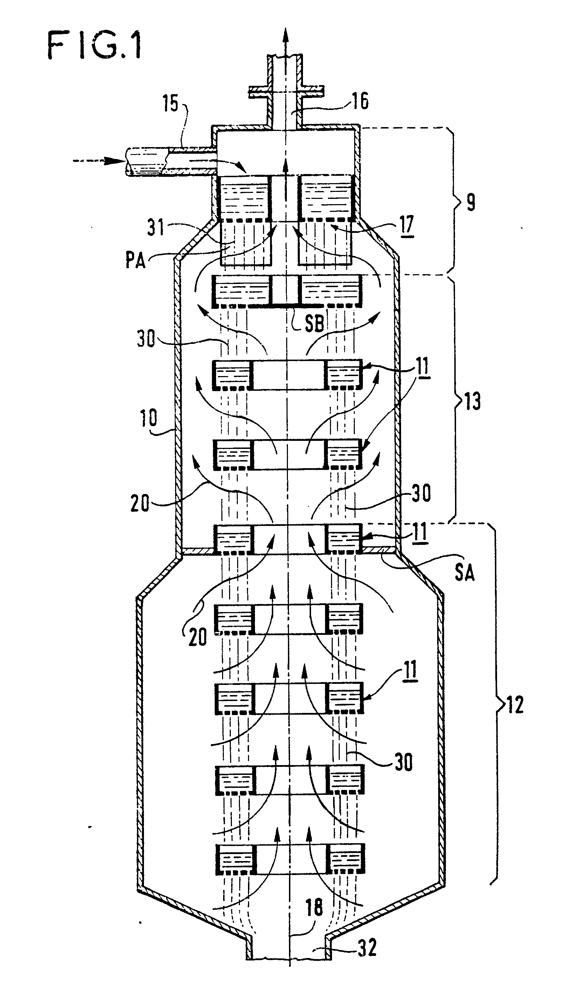

La figure 5 est une vue de dessus très schématique d'une installation comportant un certain nombre de faisceau 2 analogues à celui de la figure 1. Ils sont arrangés dans une structure hexagonale avec une arrivée centrale 1 pour la vapeur 3. Les flèches indiquent le direction de propagation de cette vapeur. Les faisceaux 2 sont disposés de façon que leurs plans de symétrie 2 soient sensiblement parallèles aux directions 3.

On va donner maintenant un exemple d'application de l'invention à un condenseur pour une centrale exploitant l'énergie thermique des mers. Les essais réalisés en laboratoire sur une tranche représentative de ce condenseur ont donné les valeurs ci-après des paramètres de fonctionnement. Ces valeurs ne sont qu'indicatives, car certaines sont susceptibles de varier suivant les caractéristiques des circuits extérieurs au condenseur, notamment suivant le débit d'eau, la caractéristique pression/débit de la pompe à vide d'extraction et la caractéristique pression/débit du circuit de vapeur en amont:
- Température d'entrée d'eau: 4°C
- Température de sortie d'eau: 10°C
- Pression d'extraction: 10 mbar
- Pression à l'entrée de vapeur: 12 mbar (d'où la perte de pression côté gaz: 2 mbar)
- Perte de charge côté eau: 2,40 m

- Pincement: 1°C
- Approche: 0°C.

Ces valeurs montrent que l'invention permet d'obtenir un pincement faible et une approche nulle avec des pertes de charge côté eau et gaz qui restent modérées.

Bien entendu l'invention n'est pas limitée à l'exemple qui vient d'être décrit. On pourra, sans sortir du cadre de l'invention, faire fonctionner le condenseur dans des conditions de températures et de pression différentes, avec un autre fluide que l'eau et sa vapeur (par exemple dans l'industrie chimique) et modifier alors de manière sensible le diamètre des perforations des plateaux, la longueur des jets, la hauteur d'eau dispersée sur chaque plateau, la distance séparant deux plateaux consécutifs, etc... pour rester dans les conditions optimales de fonctionnement.

**Revendications**

1. Condenseur à mélange pour condenser une vapeur par contact direct avec un liquide réfrigérant, ce condenseur comportant
- une enceinte (10),
- au moins une arrivée de gaz (14) au bas de cette enceinte, pour recevoir un mélange gazeux (20) contenant de la vapeur et un gaz incondensable,
- au moins une série de plateaux horizontaux (11) disposés dans cette enceinte et présentant chacun une forme allongée selon une direction horizontale avec une longueur longitudinale commune et une largeur selon une direction horizontale transversale commune, chaque plateau comportant un fond perforé de nombreux trous (22), ces plateaux se succédant verticalement de haut en bas d'un premier plateau jusqu'à un dernier plateau avec une hauteur d'intervalle entre plateaux consécutifs sensiblement constante sur toute la hauteur de la série,
- au moins une arrivée de liquide réfrigérant (15) alimentant ledit premier plateau pour que les trous du fond de ce plateau laissent couler autant de jets verticaux dont l'ensemble constitue une première cascades qui s'étend sur la longueur de ce plateau qui est associée à celui-ci et qui alimente le deuxième plateau, et pour que ce dernier forme de même une deuxième cascade qui lui est associée et alimente le troisième plateau, et ainsi de suite, jusqu'à une dernière cascade, chaque cascade (30) étant associée à un plateau de même rang, de manière à condenser la vapeur par contact avec le liquide de ces cascades, ce liquide étant réchauffé par ce contact et par son mélange au condensat,
- au moins une évacuation de liquide réchauffé (32) au bas de ladite dernière cascade,

- et des moyens d'extraction de gaz incondensables (16, 28) au haut de cette enceinte, ces moyens étant placés de manière que le mélange gazeux arrivant par ladite arrivée de vapeur ne puisse atteindre ces moyens d'extraction qu'en traversant lesdites cascades (30) selon ladite direction transversale,
- ce condenseur étant caractérisé par le fait qu'il comporte des parois de séparation (SA, SB) divisant ladite série de plateaux avec les cascades associées en plusieurs tronçons (12, 13) se succédant verticalement et tels que les diverses cascades (30) issues des divers plateaux (11) d'un même tronçon soient traversées en parallèle dans un même sens transversal par ledit mélange gazeux (20), et que les tronçons successifs soient parcourus en série de bas en haut par ce mélange, le nombre de plateaux des tronçons successifs croissant du premier au dernier tronçon de manière à diminuer la section de passage de ce mélange gazeux quand son débit décroît par condensation de vapeur, et à maintenir ainsi une vitesse de balayage sensiblement optimale propre à entraîner ledit gaz incondensable et à favoriser les échanges thermiques, tout en donnant aux diverses cascades sensiblement une même hauteur optimale qui optimise les échanges thermiques vis à vis de la perte de charge côté eau.

2. Condenseur selon la revendication 1, caractérisé en ce que ladite série comporte en outre une tronçon supérieur (9) qui comporte des perforations (26, 27) au moins dans des zones (ZT) d'un plateau supérieur (17) situé au-dessus dudit premier plateau (11), ces zones étant régulièrement réparties sur la longueur dudit plateau supérieur en laissant des intervalles entre elles, la hauteur des cascades générées étant sensiblement égale à ladite hauteur optimale,

- ladite arrivée de liquide réfrigérant (15) alimentant ces zones de plateau supérieur pour que chacune de ces zones forme une cascade supérieure locale, de même section que cette zone,
- ledit premier plateau étant alimenté par ces cascades supérieures locales,
- lesdites parois de séparation (SB) faisant circuler ledit mélange gazeux à travers ces cascades locales supérieures en série après ledit tronçon immédiatement inférieur (13) vers lesdits moyens d'extraction (16, 28),
- le condenseur comportant en outre des parois de limitation (PA, PB) s'étendant verticalement entre lesdites zones de plateau supérieur et ledit premier plateau et obligeant ledit mélange gazeux provenant de la première cascade à traverser ces cascades locales pour aller vers lesdits moyens d'extraction, tout ceci de manière à diminuer encore la section de passage du mélange gazeux pour conserver ladite vitesse de balayage optimale tout en évitant des déplacements longitudinaux importants du mélange gazeux.

3. Condenseur selon la revendication 2, caractérisé par le fait que chacune desdites cascades locales formées sous lesdites zones de plateau supérieur (ZT) et entre lesdites parois de limitation (PA) présente audit mélange gazeux une largeur de passage décroissante pour conserver sensiblement à ce mélange ladite vitesse de balayage optimale sur tout son parcours à travers cette cascade locale vers lesdits moyens d'extraction (16, 28) malgré la condensation de vapeur pendant ce parcours.

4. Condenseur selon la revendication 3, caractérisé par le fait que lesdites cascades locales formées sous lesdites zones de plateau supérieur (ZT) présentent chacune la forme d'un trapèze avec une grande base qui constitue une entrée pour ledit mélange gazeux et qui s'étend selon ladite direction longitudinale, une petite base qui constitue une sortie vers lesdits moyens d'extraction (16, 28) et deux côtés obliques bouchés par certaines desdites parois de limitation (PA), d'autres de ces parois de limitation (PB) obturant les intervalles longitudinaux entre les cascades locales consécutives.

5. Condenseur selon la revendication 1, dans lequel ladite direction longitudinale est invariable sur l'étendue de ladite enceinte (10), et lesdits plateaux sont rectangulaires.

6. Condenseur selon la revendication 5, caractérisé par le fait qu'il comporte dans ladite enceinte (10), deux dites séries de plateaux et de cascades disposées avec lesdites parois de séparation (SA, SB) symétriquement l'une de l'autre par rapport à un plan de symétrie vertical longitudinal (18) en formant les mêmes dits tronçons successifs et en délimitant pour ledit mélange gazeux dans chacun de ces tronçons un passage interne entre ces séries, ladite enceinte laissant à ce mélange un passage externe de chaque côté de l'ensemble de deux séries,

- ladite arrivée de gaz (14) amenant ce mélange gazeux dans les passages externes du tronçon de plus bas (12),
- une dite paroi de séparation (SA) obturant ces passages externes au haut de ce tronçon le plus bas pour forcer ce mélange à passer dans ledit passage interne à travers lesdites cascades de ce tronçon et introduire ce mélange dans le passage interne du tronçon immédiatement supérieur (13),
- une dite paroi de séparation (SB) obturant le passage interne au haut de ce tronçon immédiatement supérieur pour forcer ce mélange à passer dans le passage externe de ce tronçon à travers lesdites cascades et pour l'introduire dans le passage externe du tronçon suivant vers le haut (9).

7. Condenseur selon la revendication 6, caractérisé par le fait que lesdites parois de séparation (SA, SB) obturent alternativement lesdits passage externe et interne au haut desdits tronçon successifs sur toute la hauteur desdites séries, le nombre de ces tronçons étant impair de manière que lesdits moyens d'extraction (16, 28) aspirent ledit gaz incondensable dans un dit passage interne.

## Patentansprüche

1. Mischkondensator zum Kondensieren von Dampf durch direkte Berührung mit einer Kühlflüssigkeit, wobei der Kondensator aufweist:
- einen Behälter (10),
- mindestens eine Gaszuleitung (14) am unteren Ende des Behälters zur Aufnahme eines Gasgemisches (20), das Dampf und ein nichtkondensierbares Gas enthält,
- mindestens eine Reihe waagerechter, in dem Behälter angeordneter Platten (11), die eine längliche Form in waagerechter Richtung mit gemeinsamer Länge und gemeinsamer Breite in einer waagerechten Querrichtung besitzen, wobei jede Platte einen mit zahlreichen Löchern (22) durchsetzten Boden aufweist und die Platten einander senkrecht von oben nach unten aufeinanderfolgen, beginnend mit einer ersten Platte und ended mit einer letzten Platte, bei einem Zwischenabstand zwischen aufeinanderfolgenden Platten, welcher im wesentlichen über die ganze Höhe der Reihe konstant ist,
- mindestens eine Kühlmittelzuleitung (15) zur Versorgung der ersten Platte derart, daß die Löcher im Boden dieser Platte eine entsprechende Anzahl senkrechter Strahlen ausfließen lassen, die in ihrer Gesamtheit einen ersten Kaskadenfall bilden, welcher sich über die Länge dieser Platte erstreckt, ihr zugeordnet ist und die zweite Platte speist, und daß diese zweite Platte in gleicher Weise einen zweiten Kaskadenfall bildet, der ihr zugeordnet ist und die dritte Platte speist, und so weiter bis zu einem letzten Kaskadenfall, wobei jeder Kaskadenfall (30) einer Platte der gleichen Stufe zugeordnet ist und somit der Dampf durch Berührung mit der Flüssigkeit der Kaskadenfälle kondensiert und wobei die Flüssigkeit durch die Berührung und Vermischung mit dem Kondensat aufgewärmt wird,
- mindestens einen Abfluß (32) für die erwärmte Flüssigkeit unterhalb des letzten Kaskadenfalls,
- und Abzugsmittel (16, 28) für die nichtkondensierbaren Gase am oberen Ende des Behälters, wobei die Mittel derart angeordnet sind, daß das durch die Dampfzuleitung eintretende Gasgemisch die Abzugsmittel nur unter Durchquerung der Kaskadenfälle (30) in der genannten Querrichtung erreichen kann, dadurch gekennzeichnet, daß der Kondensator Trennwände (SA, SB) aufweist, welche die Reihe der Platten mit ihren zugehörenden Kaskadenfällen in mehreren senkrecht aufeinanderfolgende Strecken (12, 13) unterteilt, derart, daß die verschiedenen Kaskadenfälle (30) aus verschiedenen Platten (11) derselben Strecke parallel in der gleichen Querrichtung von dem Gasgemisch (20) durchquert werden, und daß die aufeinanderfolgenden Strecken der Reihe von unten nach oben von diesem Gemisch durchströmt werden, wobei die Anzahl der Platten der aufeinanderfolgenden Strecken von der ersten bis zur letzten Strecke in der Weise zunimmt, daß der Durchtrittsquerschnitt des Gasgemisches abnimmt, wenn ihre Menge infolge der Dampfkondensation abnimmt, und daß so eine im wesentliche optimale Beaufschlagungsgeschwindigkeit erhalten bleibt, die das nichtkondensierbare Gas mitzunehmen und den Wärmeaustausch zu begünstigen in der Lage ist, wobei dennoch den verschiedenen Kaskadenfällen im wesentlichen gleiche optimale Höhe gegeben wird, welche den Wärmeaustausch gegenüber den Druckverlusten in der Wasserströmung optimiert.

2. Kondensator nach Anspruch 1, dadurch gekennzeichnet, daß die genannte Reihe weiter eine obere Strecke (9) aufweist, die zumindest in den Zonen (ZT) einer oberen Platte (17) oberhalb der genannten ersten Platte (11) Löcher (26, 27) besitzt, wobei diese Zonen gleichmäßig unter Belassung von Zwischenabständen über die Länge der oberen Platte verteilt sind und die Höhe der erzeugten Kaskadenfälle im wesentlichen gleich der genannten optimalen Höhe sind,
- wobei die Kühlmittelzuleitung (15) diese Zonen der oberen Platte zur Bildung jeweils eines oberen örtlichen Kaskadenfalls gleichen Querschnitts wie diese Zone versorgt,
- wobei die erste Platte von den oberen örtlichen Kaskadenfällen gespeist wird,
- wobei die Trennwände (SB) das Gasgemisch quer durch die oberen örtlichen Kaskadenfälle in Reihe hinter der unmittelbar darunterliegenden Strecke (13) zu den Abzugsmitteln (16, 28) zirkulieren lassen,
- wobei der Kondensator weiter Begrenzungswände (PA, PB) aufweist, die sich senkrecht zwischen den Zonen der oberen Platte und der ersten Platte erstrecken und das vom ersten Kaskadenfall kommende Gasgemisch zwingen, diese örtlichen Kaskadenfälle zu durchqueren, um zu den Abzugsmitteln zu gelangen, derart, daß der Durchtrittsquerschnitt des Gasgemisches weiter verringert wird, um die optimale Beaufschlagungsgeschwindigkeit beizubehalten, zugleich aber große Längsbewegungen des Gasgemisches zu vermeiden.

3. Kondensator nach Anspruch 2, dadurch gekennzeichnet, daß jeder der unter den oberen Plattenzonen (ZT) und zwischen den Begrenzungswänden (PA) gebildeten örtlichen Kaskadenfälle dem Gasgemisch eine abnehmende Durchtrittsbreite darbietet, damit dem Gemisch die optimale Beaufschlagungsgeschwindigkeit auf seinem gesamten Weg durch die örtliche Kaskade zu den Abzugsmitteln (16, 28) trotz der Dampfkondensation während dieses Weges im wesentlichen erhalten bleibt.

4. Kondensator nach Anspruch 3, dadurch gekennzeichnet, daß die unter den oberen Plattenzonen (ZT) gebildeten örtlichen Kaskadenfälle jeweils die Form eines Trapezes besitzen, dessen große Grundlinie einen Eingang für das Gasgemisch bildet und sich in Längsrichtung erstreckt, dessen kleine Dachlinie einen Ausgang zu den Abzugsmitteln (16, 28) bildet, und dessen schräge Seiten von bestimmten Begrenzungswänden (PA) verschlossen sind, während andere dieser Begrenzungswände (PB) die zwischen den aufeinanderfolgenden örtlichen Kaskadenfällen bestehenden Längsabstände verschließen.

5. Kondensator nach Anspruch 1, bei dem die Längsrichtung über die Erstreckungsrichtung des Behälters (10) unverändert läuft und die Platten rechteckig sind.

6. Kondensator nach Anspruch 5, dadurch gekennzeichnet, daß er in dem Behälter (10) zwei Platten- und Kaskadenreihen aufweist, die zusammen mit den Trennwänden (SA, SB) jeweils symmetrisch zu einer senkrechten Symmetrielängsebene (18) angeordnet sind und die gleichen Folgestrecken bilden, und die dem Gasgemisch in jeder der Strecken einen innere Durchlaß zwischen den Reihen begrenzen, wobei der Behälter dem Gemisch auf jeder Seite der Gesamtheit beider Reihen einen äußeren Durchlaß beläßt,
- wobei die Gaszuleitung (14) das Gasgemisch in die äußeren Durchlässe der untersten Strecke (12) einleitet,
- wobei eine Trennwand (SA) diese äußeren Durchlässe am oberen Ende der untersten Strecke verschließt, um das Gemisch zu zwingen, den inneren Durchlaß nach Durchquerung der Kaskadenfälle dieser Strecke zu nehmen und um das Gemisch in den inneren Durchlaß der unmittelbar darüber befindlichen Strecke (13) zu leiten,
- wobei eine Trennwand (SB) den inneren Durchlaß am oberen Ende der direkt darüber befindlichen Strecke verschließt, um das Gemisch zu zwingen, den äußeren Durchlaß dieser Strecke nach Durchquerung der Kaskadenfälle zu nehmen und um es im äußeren Durchlaß der nächsten Strecke nach oben (9) zu leiten.

7. Kondensator nach Anspruch 6, dadurch gekennzeichnet, daß die Trennwände (SA, SB) abwechselnd die äußeren und inneren Durchlässe am oberen Ende der aufeinanderfolgenden Strecken über die gesamte Höhe der Reihen verschließen, wobei die Anzahl der Strecken unpaarig ist, derart, daß die Abzugsmittel (16, 28) das nichtkondensierbare Gas aus einem der inneren Durchlässe absaugen.

## Claims

1. A mixing condenser for condensing steam by direct contact with a cooling liquid, said condenser comprising:
- an enclosure (10),
- at least one gas inlet (14) at the bottom of this enclosure for receiving a gaseous mixture (20) containing steam and an uncondensable gas,
- at least one series of horizontal trays (11) disposed inside this enclosure and each presenting an elongated shape having the same length along the same horizontal direction and having their widths extending along the same transverse horizontal direction, each tray including a bottom perforated by numerous holes (22), these trays following one another vertically from top to bottom from a first tray to a last tray with the gaps between consecutive trays being of substantially the same height over the entire height of the series,
- at least one cooling liquid inlet (15) feeding said first tray so that the holes through the bottom of this tray allow a corresponding number of vertical jets to flow therethrough which together constitute a first shower which extends over the length of this tray, which is associated therewith, and which feeds the second tray, and so that the second tray similarly constitutes a second shower which is associated therewith and which feeds the third tray, and so on to a last shower, each shower (30) being associated with a tray belonging to the same rank, thereby condensing the steam by contact with the liquid in these showers, this liquid being heated by this contact and by mixing with the condensate,
- at least one outlet for heated liquid (32) at the bottom of said last shower,
- and extractor means for extracting the uncondensable gases (16, 28) from the top of this enclosure, these means being placed in such a manner that the gaseous mixture arising via said steam inlet can only reach these extractor means by passing through said showers (30) along said transverse direction,
- this condenser being characterized by the fact that it includes separator walls (SA, SB) dividing said series of trays with their associated showers into a plurality of portions (12, 13) which succeed one another vertically and in such a manner that said gaseous mixture (20) passes in parallel along the same transverse direction through the various showers (30) from the various trays (11) of the same portion, and that this mixture passes through successive ones of said portions in series from the bottom to the top, the number of trays in successive portions increasing from the first to the last portion in such a manner as to reduce the flow cross-section of this gaseous mixture as its flowrate decreases by virtue of the steam condensing, thereby maintaining a substantially optimal scavenging speed suitable for entraining the uncondensable gas and for promoting heat exchange, while giving the various showers substantially the same optimum height which optimizes heat exchange relative to water headloss.

2. A condenser according to claim 1, characterized in that said series further includes a top portion (9) having perforations (26, 27) at least in zones (ZT) of the top tray (17) situated above said first tray (11), said zones being regularly distributed over the length of said top tray and leaving gaps therebetween, the height of the resulting showers being substantially equal to said optimum height,
- said cooling liquid inlet (15) feeding these zones of the top tray so that each of these zones forms a local top shower having the same area as said zone,
- said first tray being fed by these local top showers,
- said separator walls (SB) causing said gaseous mixture to flow between these top local showers in series towards said extractor means (16, 28), after passing through the next lower portion (13),
- the condenser further including limiter walls (PA, PB) extending vertically between said zones of the top tray and said first tray and obliging said gaseous mixture from the first shower to pass through these local showers in order to go towards said extractor means, thereby further reducing the section of the gaseous mixture flow in order to conserve said optimum scavenging speed while avoiding large longitudinal displacements of the gaseous mixture.

3. A condenser according to claim 2, characterized in that each of said local showers formed under said zones of the top tray (ZT) and between said limiter walls (PA) offers a decreasing flow width to said gaseous mixture in order to substantially conserve said optimum scavenging speed for this mixture over its entire path through this local shower towards said extractor means (16, 28) in spite of the steam condensation which takes place along this path.

4. A condenser according to claim 3, characterized in that each of said local showers formed beneath said perforated zones of the top tray (ZT) has a trapezium shape with a large base which constitutes an inlet for said gaseous mixture and which extends along said longitudinal direction, a small base which constitutes an outlet towards said extractor means (16, 28), and two sloping sides which are closed by some of said limiter walls (PA), others of these limiter walls (PB) closing the longitudinal gaps between consecutive local showers.

5. A condenser according to claim 1, wherein the longitudinal direction is the same over the extent of the enclosure (10) and the trays are rectangular.

6. A condenser according to claim 5, characterized in that it includes within said enclosure (10) two of said series of trays and showers, with said separator walls (SA, SB) being disposed symmetrically relative to one another about a vertical longitudinal plane of symmetry (18) to form the same successive portions and to delimit an inside passage between said two series for said gaseous mixture in each of these portions, said enclosure leaving a passage for this mixture outside each side of the assembly comprising both series,
- said gas inlet (14) bringing this gaseous mixture into the outside passages of the bottom portion (12),
- one said separator wall (SA) closing these outside passages level with this bottom portion (12) in order to force this mixture to pass into said inside passage through said showers of this portion and to inject this mixture into the inside passage of the next higher portion (13),
- one said separator wall (SB) closing the inside passage at the top of this next higher portion to force this mixture to pass into the outside passage of this portion through said showers and to inject it into the outside passage of the subsequent next higher portion (9).

7. A condenser according to claim 6, characterized in that the separator walls (SA, SB) close the outside and inside passages alternately at the tops of the successive portions over the entire height of the series, the number of the portions being odd so that the extractor means (16, 28) suck the uncondensable gas from one of said inside passages.

FIG.1

0 189 029

FIG.2

FIG.3

FIG.4

3

# FIG.5